# EUROPEAN PATENT SPECIFICATION

(11) **EP 0 317 361 B1**
(45) Date of publication and mention of the grant of the patent: **08.09.1993**
(21) Application number: 88310968.8
(22) Date of filing: 21.11.1988
(51) Int. Cl.: H04N 1/46, H04N 1/04

(54) **Filter change-over mechanism for use in color image reading apparatus**
Filterauswechslungsmechanismus zur Verwendung in einem Farbbildlesegerät
Mécanisme de changement de filtre utilisé dans un appareil de lecture d'images en couleurs

(30) Priority: 19.11.1987 JP 176746/87
(43) Date of publication of application: 24.05.1989
(73) Proprietor: SHARP KABUSHIKI KAISHA, Osaka 545 (JP)
(72) Inventor: Nakao, Motokazu, Sakurai-shi Nara-ken (JP); Tojo, Tomotarou, Uda-gun Nara-ken (JP); Tanaka, Kenji, Uji-shi Kyoto-fu (JP)
(74) Representative: Brown, Kenneth Richard

(56) References cited:
- US-A- 4 518 988
- PROCEEDINGS OF THE THIRD INTERNATIONAL CONGRESS ON ADVANCES IN NON-IMPACT PRINTING TECHNOLOGIES, San Francisco, 24th - 28th August 1986, pages 339-346, Springfield, US; R. TAKEUCHI et al.: "Color document scanner with an RGB linear image sensor"

## Description

The present invention generally relates to a colour image reading apparatus so arranged that, by projecting light onto an original document, reflected light from the surface of the original document is subjected to colour separation by filters in a plurality of colours for subsequent photoelectric conversion by a solid state image pick-up element or the like. More particularly, the invention relates to a change-over mechanism for filters in a plurality of colours for use in such colour image reading apparatus.

Conventionally, as disclosed, for example, in Japanese Patent Laid-Open Publication No. 58-43658 (JP-A-58 043 658), there has been proposed an image reading apparatus of a stationary original document type in which an image reading optical system is formed into a unit for scanning over the surface of an original document so that, not only a sheet-like original document, but also a book-type original document (e.g. a book) may be read.

Meanwhile, as a colour image reading apparatus for reading an original document in colour, there has also been conventionally proposed an arrangement in which light projected onto and reflected from an original document is subjected to colour separation by displacing filters in a plurality of colours vertically, laterally, or through rotation as disclosed, for example, in Japanese Patent Laid-Open publication No. 60-206361 (JP-A-60 206 361) or No. 61-84150 (JP-A-61 084 150).

However, in the prior art techniques as referred to above, a complicated change-over mechanism is required in addition to a requirement for a driving source exclusive to the filter change-over in order to efficiently change over the filters in the plurality of colours. When such a change-over mechanism is incorporated into the image reading apparatus of the stationary original document type as referred to earlier, special mechanisms for supporting the image reading unit and a large driving source for the driving thereof are required. As a result, the image reading apparatus becomes larger in size and heavier in weight.

The present invention is concerned with the above problems and aims to provide a filter change-over mechanism for use in a colour image reading apparatus, which is compact in size and light in weight.

The present invention also aims to provide a filter change-over mechanism of the above described type, which is simple in construction and stable in functioning at high reliability.

In accordance with one aspect of the invention, there is provided a filter change-over mechanism for use in a colour image reading apparatus comprising an image reading unit which is movable relative to a main body of said apparatus for scanning along an original document, in which image reading unit filters in a plurality of colours for subjecting light from a light source as reflected by said original document, for performing colour separation, are disposed in front of an image pick-up element, said filter change-over mechanism comprising a contact member provided on said main body for contacting a specific part of the image reading unit when said image reading unit is positioned at a predetermined position in a scanning region of said image reading apparatus, and a filter change-over means provided at said specific part of said image reading unit for changing over said filters by movement of said filters, relative to the optical path within said image reading unit, said movement being produced by travel of the image reading unit beyond said predetermined position.

In accordance with another aspect of the invention, there is provided a colour image reading apparatus including a reading unit which is operable to cause a relative scanning movement between the reading unit and an original, the reading unit including a light source for illuminating the original, a photosensor element and a plurality of different coloured filters which are movable, relative to the optical path within the reading unit, for filtering the light from the illuminated original, a filter change-over mechanism being provided for changing the filters for successive scans, wherein said change-over mechanism is operable to effect filter change by movement of a member carrying said filters produced by the scanning movement of the image reading unit.

By the arrangement of the present invention, it is not necessary to provide a separate driving source for the change-over of the filters, and the change-over function of the filters may be readily effected by displacing the image reading unit to a predetermined position for scanning.

An embodiment of the invention will now be described, by way of example only, with reference to the accompanying drawings, in which:
Fig. 1 is an exploded perspective view of an image reading unit which incorporates a filter change-over mechanism according to the present invention;
Fig. 2 is a schematic side sectional view taken along the line II-II in Fig. 1;
Fig. 3A is a side elevational view showing, on an enlarged scale, a filter panel with a filter change-over mechanism employed in the arrangement of Fig. 1;
Fig. 3B is a top plan view of the filter panel in Fig. 3A;
Fig. 3C(a) is a cross-section, on an enlarged scale, of a filter positioning block taken along the line IIIC-(a)-IIIC-(a) in Fig. 3B;

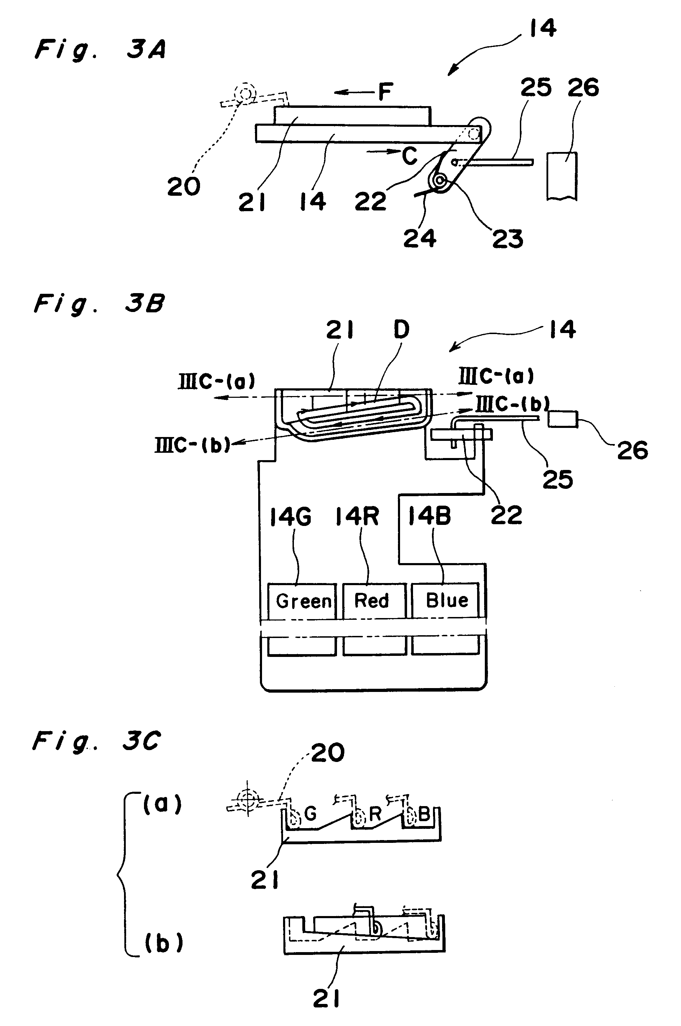

Fig. 3C(b) is a cross-section, on an enlarged scale, of a filter positioning block taken along the line IIIC-(b)-IIIC-(b) in Fig 3B; and
Fig. 4 is a perspective view of a colour image reading apparatus which incorporates a filter change-over mechanism according to the present invention.

Before the description of an embodiment of the present invention proceeds, it is to be noted that like parts are designated by like reference numerals throughout the accompanying drawings.

Referring now to the drawings, there is shown in Fig. 4, a colour image reading apparatus 1 of a stationary original document type to which a filter change-over mechanism according to the present invention has been applied. The colour image reading apparatus 1 includes: a main body 1a having a window portion 3 provided with transparent plates 2 on its upper and lower surfaces; an image reading unit 4 arranged to be driven for scanning within the window portion 3 of the main body 1a in directions indicated by arrows A so as to read an image of an original document 5 disposed thereunder; and control switches 6 provided adjacent to one edge of the main body 1a for controlling functioning of the apparatus 1.

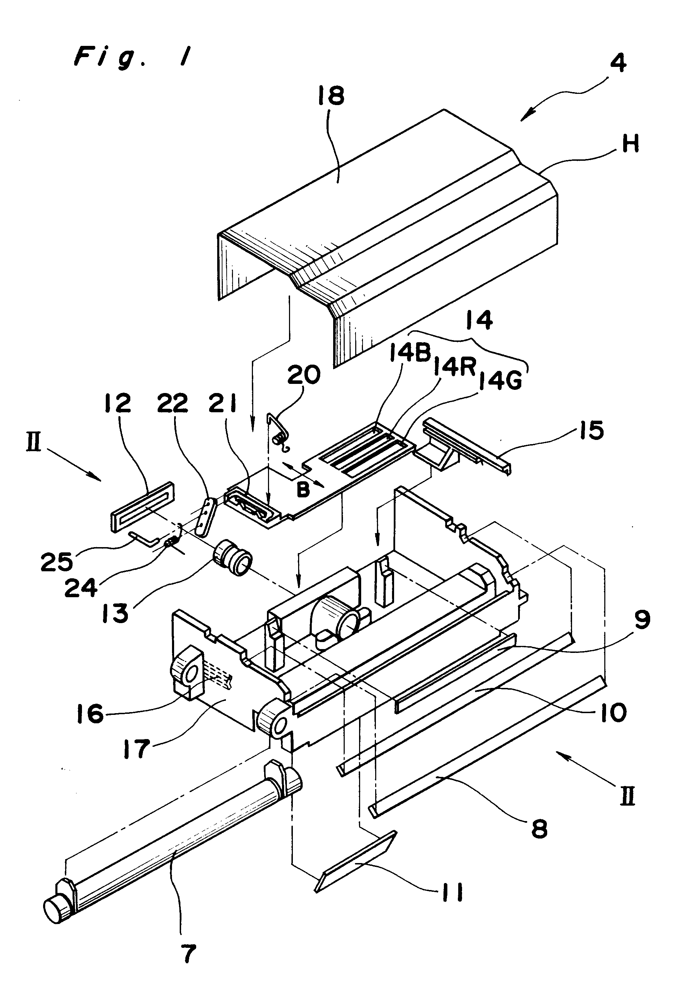

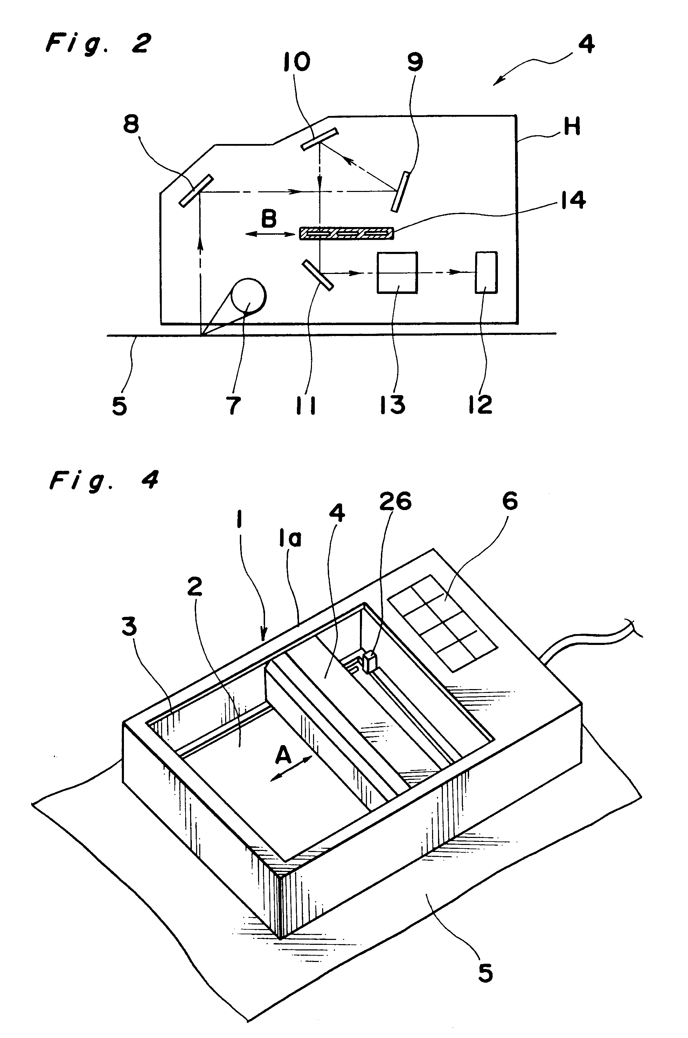

Referring also to Figs. 1 and 2, the image reading unit 4 includes a housing H having an upper cabinet 18 and a lower cabinet 17, a light source of fluorescent lamp 7 for projecting light onto the original document 5, reflecting mirrors 8, 9, 10 and 11 for leading light reflected by the original document 5 to an image pick-up element, e.g., a solid state image pick-up element 12, through an image forming lens 13, and a filter panel 14 provided with filters 14R (red), 14G (green), and 14B (blue) in a plurality of colours and movably supported at its opposite ends in the housing H through guide members 15 and 16 for displacement in directions indicated by arrows B in Fig. 1.

In Fig. 2, showing a schematic cross-section of the image reading unit 4 taken along the line II-II in Fig. 1, light projected from the light source 7 and reflected by the original document 5 is led to the filter panel 14 through the reflecting mirrors 8, 9 and 10. Colour separation of the light is effected as the filters 14G, 14R and 14B of the filter panel 14 are successively changed over in the directions of the arrows B. Thereafter, the light passing through the selected specific filter of the filter panel 14 is led to the image forming lens 13 so as to form the image on the solid state image pick-up element 12.

The specific change-over mechanism of the filters in the filter panel 14 as shown in Figs. 1 and 2 will now be described with reference to Figs. 3A to 3C.

The filter panel 14 includes a filter positioning block 21 associated with a filter stopper spring 20, and a filter driving arm 22 pivotally connected to the filter panel at one end, and to the housing H at its other end for pivotal movement about a pin 23. A spring 24 is directed around the pin 23 for normally urging the filter panel 14 in a direction indicated by an arrow C through the arm 22. A shaft 25 extends laterally from an intermediate position of the filter driving arm 22 to permit contact of the shaft 25 with a contact member 26 provided on the apparatus main body 1a under the image reading unit 4. Such contact enables the filter panel 14 to be displaced in the direction of the arrow F through rotation of the arm 22 about the pin 23. The filter stopper spring 20 is successively guided, at its one end, over the filter positioning block 21 in a direction indicated by an arrow D.

As shown in Fig. 3C(a), the filter stopper spring 20 is located in one of the positioning points G, R and B of the filter positioning block 21 for scanning through the filters 14G, 14R and 14B respectively. A filter is selected for insertion into the optical path according to the position of the image reading unit 4 within the window portion 3 of the apparatus main body 1a upon the completion of each scan. More specifically, for selection of the filter 14G, the position of the image reading unit 4 is such that there is no contact of the shaft 25 with the contact member 26. Thus, the filter positioning block is held in the position shown in Fig. 3A, with the filter stopper spring 20 seated in the point G, by the action of spring 24 on the arm 22. When the filter 14R is to be selected, the image reading unit 4 travels beyond the position in which there is contact between the shaft 25 and the contact member 26, so that the arm is caused to rotate to an extent sufficient for the filter stopper spring 20 to ride into the point R of the filter positioning block. The filter 14B is selected in a similar manner by bringing the image reading unit 4 closer still to the contact member 26.

As described above, the respective filters 14G, 14R and 14B are successively changed over by varying the position of the image reading unit 4 within the window portion 3 of the apparatus main body 1a upon the completion of the scanning associated with each filter. The filter panel 14 is repositioned at the point G by causing the filter stopper spring 20 to travel the portion of the block 21 along the line IIIC-(b)-IIIC-(b) in Fig. 3B, after completion of scanning through each of the three filters, in preparation for the subsequent image reading (Fig. 3C-(b)).

As is clear from the foregoing description, according to the filter change-over mechanism of the present invention, since the filters in the plurality of colours are changed over through utilization of the scanning function of the image reading unit, it becomes unnecessary to provide a driving source exclusively for the filter change-over, and a complicated change-over mechanism etc., and therefore, the image reading apparatus may be constructed to be compact in size and light in weight, while owing to the fact that the number of parts involved may be reduced, a colour image reading apparatus on the whole can be provided at low cost.

## Claims

1. A filter change-over mechanism for use in a colour image reading apparatus (1) comprising an image reading unit (4) which is movable relative to a main body (1a) of said apparatus (1) for scanning along an original document, in which image reading unit (4) filters (14B, 14G, 14R) in a plurality of colours for subjecting light from a light source (7) as reflected by said original document, for performing colour separation, are disposed in front of an image pick-up element (12), said filter change-over mechanism comprising a contact member (26) provided on said main body (1a) for contacting a specific part of the image reading unit (4) when said image reading unit is positioned at a predetermined position in a scanning region (3) of said image reading apparatus (1), and a filter change-over means provided at said specific part of said image reading unit (4) for changing over said filters by movement of said filters, relative to the optical path within said image reading unit (4), said movement being produced by travel of the image reading unit (4) beyond said predetermined position.

2. A filter change-over mechanism according to claim 1, wherein said filter change-over means includes a filter panel (14) having said filters (14B, 14G and 14R) disposed thereon and movably supported within said image reading unit (4) for said movement of the filters through an arm member (22) pivotably connected thereto, and a shaft member (25) extending outwardly from said arm member (22) for contact with said contact member (26).

3. A colour image reading apparatus (1) including a reading unit (4) which is operable to cause a relative scanning movement between the reading unit and an original, the reading unit (4) including a light source (7) for illuminating the original, a photosensor element (12) and a plurality of different coloured filters (14G, 14R, 14B) which are movable, relative to the optical path within the reading unit, for filtering the light from the illuminated original, a filter change-over mechanism (14, 20-25) being provided for changing the filters for successive scans, wherein said change-over mechanism is operable to effect filter change by movement of a member (14) carrying said filters produced by the scanning movement of the image reading unit.

## Patentansprüche

1. Filterwechselmechanismus zur Verwendung in einer Farbbildlesevorrichtung (1), die eine Bildlesevorrichtung aufweist (4), welche zum Abtasten einer Vorlage relativ zu einem Hauptkörper (1a) der Vorrichtung (1) bewegbar ist, wobei in der Bildleseeinheit (4) Filter (14B, 14G, 14R) in mehreren Farben vor einem Bildaufnahmeelement (12) angeordnet sind, um von einer Lichtquelle (7) kommendes, von der Vorlage reflektiertes Licht einer Farbentrennung zu unterziehen, wobei der Filterwechselmechanismus aufweist: ein an dem Hauptkörper (1a) vorgesehenes Kontaktteil (26) zum Berühren eines bestimmten Teiles der Bildleseeinheit (4), wenn die Bildleseeinheit an einer vorbestimmten Position in einem Abtastbereich (3) der Bildlesevorrichtung (1) angeordnet ist, und eine an dem bestimmten Teil der Bildleseeinheit (4) vorgesehene Filterwechseleinrichtung zum Wechseln der Filter durch Bewegen der Filter relativ zu dem optischen Weg innerhalb der Bildleseeinheit (4), wobei die Bewegung durch das Laufen der Bildleseeinheit (4) über die vorbestimmte Position hinaus erzeugt wird.

2. Filterwechselmechanismus nach Anspruch 1, bei dem die Filterwechseleinrichtung eine Filterplatte (14) mit den Filtern (14B, 14G und 14R), die auf dieser angeordnet ist und in der Bildleseeinheit (4) bewegbar gestützt ist, um die Filter durch ein schwenkbar mit dieser verbundenes Armteil (22) zu bewegen, und ein sich von dem Armteil (22) nach außen erstreckendes Schaftteil (25) zum Kontakt mit dem Kontaktteil (26) aufweist.

3. Farbbildlesevorrichtung (1) mit einer Leseeinheit (4), die zum Bewirken einer relativen Abtastbewegung zwischen der Leseeinheit und einer Vorlage betreibbar ist, wobei die Leseeinheit (4) eine Lichtquelle (7) zum Beleuchten der Vorlage, ein Photosensorelement (12) und mehrere verschiedene farbige Filter (14G, 14R, 14B) aufweist, die relativ zum optischen Weg innerhalb der Leseeinheit zum Filtern des von der beleuchteten Vorlage kommenden Lichtes bewegbar sind, wobei ein Filterwechselmechanismus (14, 20-25) zum Wechseln der Filter für aufeinanderfolgende Abtastungen vorgesehen ist, bei der der Wechselmechanismus zum Bewirken von Filterwechseln durch Bewegen eines die Filter tragenden Teils (14) betreibbar ist, wobei die Bewegung durch die Abtastbewegung der Bildleseeinheit erzeugt wird.

## Revendications

1. Mécanisme de changement de filtre pour utilisation dans un appareil de lecture d'image en couleurs (1) comprenant une unité de lecture d'image (4) qui est mobile par rapport à un corps principal (1a) dudit appareil (1) pour l'exploration d'un document original, dans lequel les filtres (14B, 14G, 14R) de l'unité de lecture d'image (4), d'une pluralité de couleurs, pour le traitement de la lumière issue d'une source de lumière (7) et réfléchie par ledit document original, afin de réaliser une séparation de couleur, sont disposés face à un élément de prise de vue (12), ledit mécanisme de changement de filtre comprenant un élément de contact (26) situé sur ledit corps principal (1a) pour venir en contact avec une partie déterminée de l'unité de lecture d'image (4) lorsque ladite unité de lecture d'image est positionnée dans une position prédéterminée d'une zone d'exploration (3) dudit appareil de lecture d'image (1), et un moyen de changement de filtre situé sur ladite partie déterminée de ladite unité de lecture d'image (4) pour changer lesdits filtres à l'aide du déplacement desdits filtres par rapport au champ optique à l'intérieur de ladite unité de lecture d'image (4), ledit déplacement étant obtenu en déplaçant l'unité de lecture d'image (4) au-delà de ladite position prédéterminée.

2. Mécanisme de changement de filtre selon la revendication 1, dans lequel ledit moyen de changement de filtre comprend un panneau de filtrage (14) dans lequel lesdits filtres (14B, 14G et 14R) sont disposés, et est supporté de façon mobile à l'intérieur de ladite unité de lecture d'image (4) pour autoriser ledit déplacement des filtres à l'aide d'un élément de bras (22) raccordé de façon pivotante à celui-ci, et d'un élément d'arbre (25) s'étendant à l'extérieur dudit élément de bras (22) afin d'entrer en contact avec ledit élément de contact (26).

3. Appareil de lecture d'image en couleurs (1) comprenant une unité de lecture (4) qui est utilisable pour créer un déplacement d'exploration relatif entre l'unité de lecture et un original, l'unité de lecture (4) comprenant une source de lumière (7) pour éclairer l'original, un élément photosensible (12) et une pluralité de filtres de couleurs différentes (14G, 14R, 14B) qui sont mobiles, par rapport au champ optique à l'intérieur de l'unité de lecture, pour filtrer la lumière issue de l'original éclairé, un mécanisme de changement de filtre (14, 20 à 25) étant prévu pour changer les filtres à chaque exploration, dans lequel ledit mécanisme de changement est utilisable pour réaliser les changements de filtres grâce au déplacement d'un élément (14) supportant lesdits filtres, produit par le déplacement d'exploration de l'unité de lecture d'image.
